# EUROPEAN PATENT APPLICATION

(11) **EP 4 691 745 A1**
(43) Date of publication of application: **11.02.2026**
(21) Application number: 23932053.4
(22) Date of filing: 06.04.2023
(51) Int. Cl.: B29D 15/00, B29C 33/42, B29C 33/48, B29C 33/76

(54) **MOLD AND METHOD FOR MOLDING FLEXIBLE EXTERNAL GEAR**

(71) Applicant: Harmonic Drive Systems Inc., Shinagawa-ku Tokyo 140-0013 (JP)
(72) Inventor: SHIROKOSHI, Norio, Azumino-shi, Nagano 399-8305 (JP)
(74) Representative: TBK
(86) International application number: PCT/JP2023/014291
(87) International publication number: WO 2024/209642

(57) **Abstract**

A mold (100) used for molding a flexible external gear (3) of a strain wave gearing (1) is provided with an outer die (110) and a center die (120) that defines the inner peripheral surface shape of the flexible externally toothed gear (3). The center die (120) is provided with a die divided part (122) composed of a plurality of divided dies (121) divided in the circumferential direction. Each divided die (121) can be retracted by a divided die movement mechanism (140) from a molding position (121A) to a retracted position (121B) that is radially inward from the molding position. When the mold is opened after molding, the die divided part (122) as a whole is slightly contracted by retracting each divided die (121) to the radially inward retracted position (121B). The center die (120) can be extracted from the outer die (110) without applying excessive force.

## Description

### TECHNICAL FIELD

The present invention relates to a mold for a flexible externally toothed gear that is suitable for use in manufacturing a flexible externally toothed gear, which is one of the constituent components of a strain wave gearing, by casting, injection molding, or the like, and also relates to a method for molding a flexible externally toothed gear using said mold.

### BACKGROUND ART

A strain wave gearing has three basic constituent elements: a rigid internally toothed gear, a flexible externally toothed gear, and a wave generator that causes the flexible externally toothed gear to flex into an ellipsoidal shape and partially mesh with the rigid internally toothed gear. By causing the wave generator to rotate, the positions where the externally toothed gear meshes with the internally toothed gear move in a circumferential direction, and relative rotation corresponding to the difference in the number of teeth between the two gears occurs between the two gears. One of the gears is fixed so as not to rotate, and reduced rotation is outputted from the other gear to a load side.

The flexible externally toothed gear has a cylindrical part that can flex in a radial direction, and external teeth formed on an outer peripheral surface of the cylindrical part. A wave generator having a non-circular outer peripheral surface, e.g., an ellipsoidal outer peripheral surface, is fitted inside the cylindrical part from an axial direction, the cylindrical part is caused to flex into an ellipsoidal shape by the wave generator, and the cylindrical part meshes with the rigid internally toothed gear at two positions on both ends of the major axis of the ellipsoidal shape. A known example of a wave generator is a three-lobe-shaped wave generator, and a flexible externally toothed gear caused to flex by the wave generator meshes with a rigid internally toothed gear at three positions equiangularly spaced in the circumferential direction. Since the wave generator is assembled from the axial direction into the cylindrical part on which the external teeth of the flexible externally toothed gear are formed, an inner diameter of the cylindrical part is typically the same along the axial direction.

Molding flexible externally toothed gears by casting, injection molding, or the like has been proposed (Patent Documents 1, 2, and 3). A mold used to mold a flexible externally toothed gear is constituted of, for example, an outer die that defines an outer peripheral surface shape of the flexible externally toothed gear, and a center die that defines an inner peripheral surface shape of the flexible externally toothed gear. In a clamped state in which the center die has been inserted into the outer die from the axial direction, a cavity of a shape corresponding to the flexible externally toothed gear to be molded is formed between the center and outer dies, and a molded product of the flexible externally toothed gear is formed from a molding material injected or filled into the cavity. After molding, a mold-opening operation is performed in which the center die is removed from the outer die in the axial direction, and after the die opening, a mold-releasing operation is performed in which the molded product is taken out of the outer die or the center die.

### PRIOR ART DOCUMENT

### PATENT DOCUMENT

Patent Document 1: JP S63-62935 A
Patent Document 2: JP H05-52404 U
Patent Document 3: WO 2021/140592

### DISCLOSURE OF THE INVENTION

### PROBLEMS TO BE SOLVED BY THE INVENTION

In the mold used to mold the flexible externally toothed gear, it may not be possible to sufficiently ensure punching allowance for removing the center die from the outer die. That is, the inner diameter of the cylindrical part of the flexible externally toothed gear in which the wave generator is incorporated is generally the same in the axial direction. In the center die having a shaping outer peripheral surface that defines the inner peripheral surface shape of this cylindrical part, it may not be possible to provide a taper on the shaping outer peripheral surface so as to obtain the necessary punching allowance. In such cases, the mold-opening operation of the mold and the mold-releasing operation of removing the molded product from the center die cannot be performed smoothly, resulting in problems such as a shortened die life.

With the foregoing in view, it is an object of the present invention to provide a mold for a flexible externally toothed gear with which operations such as mold-opening can be performed smoothly.

It is also an object of the present invention to provide a method for molding a flexible externally toothed gear using said mold.

### MEANS OF SOLVING THE PROBLEMS

The present invention relates to a mold used to mold a flexible externally toothed gear, which is one of the constituent components of a strain wave gearing and which has a cylindrical part capable of flexing in a radial direction, the mold characterized by comprising
an outer die that defines an outer peripheral surface shape of the cylindrical part, and
a center die that defines an inner peripheral surface shape of the cylindrical part, and
the center die comprising
a die divided part that is divided in a circumferential direction to have a plurality of divided dies and defines the inner peripheral surface shape of the cylindrical part, and
a divided die movement mechanism that causes each of the divided dies of the die divided part to retract from a molding position to a retracted position radially inward of the molding position.

The present invention also relates to a method for molding a flexible externally toothed gear in which a flexible externally toothed gear for a strain wave gearing is molded using a mold having the above-described configuration, the molding method characterized by the steps of
retracting each of the divided dies of the die divided part of the center die from the molding position to the retracted position during mold-opening in which the center die is pulled out of the outer die in the mold in a clamped state after molding, and
starting a mold-opening operation of the mold after each of the divided dies has been retracted to the retracted position.

In the present invention, a divided die part constituted of a plurality of divided dies is formed in a center die that defines the inner peripheral surface shape of a cylindrical part of a flexible externally toothed gear to be molded. During mold opening, the divided dies of the divided die part are moved to a radially inward retracted position, whereby the divided die part slightly contracts as a whole. It is thereby possible to smoothly remove the center die from of the outer die.

The flexible externally toothed gear of the strain wave gearing ordinarily meshes with the rigid internally toothed gear at a plurality of positions equiangularly spaced in the circumferential direction. The divided die part of the center die used to mold the flexible externally toothed gear can be constituted of the plurality of divided dies divided by a plurality of axially extending division lines formed at positions equiangularly spaced along the circumferential direction. For example, the divided die part can have a collet structure.

When such a configuration is adopted, molding error may occur in portions of the side of the molded product that correspond to the positions of the division lines. If a state is formed in which the portions where molding error occurs in the cylindrical part of the flexible externally toothed gear, which is the molded product, simultaneously match the meshing positions with the rigid internally toothed gear at a plurality of positions, meshing defects due to molding error may be less possible to disregard. To avoid such problems, the number of divisions is set so that the division positions of the divided dies in the divided die part of the center die do not simultaneously match, in multiple locations, the meshing positions of the flexible externally toothed gear to be molded.

Therefore, if m and n are positive integers, where m is the number of meshing positions between the flexible externally toothed gear and the rigid internally toothed gear, and n is the number of divisions of the divided dies, then the number of divisions n should be set so that m and n are relatively prime.

### BRIEF DESCRIPTION OF THE DRAWINGS

FIG. 1A is a longitudinal cross-sectional view of a cup-type strain wave gearing;
FIG. 1B is a front view of the cup-type strain wave gearing;
FIG. 2A is an explanatory drawing of a mold used to mold a flexible externally toothed gear;
FIG. 2B is a perspective view of a center die of the mold;
FIG. 3A is an explanatory drawing of one example of a case in which divided ends of divided dies in a die divided part of the center die are at different positions; and
FIG. 3B is an explanatory drawing of another example of a case in which divided ends of divided dies in a die divided part of the center die are at different positions.

### MODE FOR CARRYING OUT THE INVENTION

An embodiment of a strain wave gearing to which the present invention is applied shall be described below with reference to the drawings. The embodiment described below presents an applied example of the present invention and is not intended to limit the present invention to the embodiment.

### (Example of strain wave gearing)

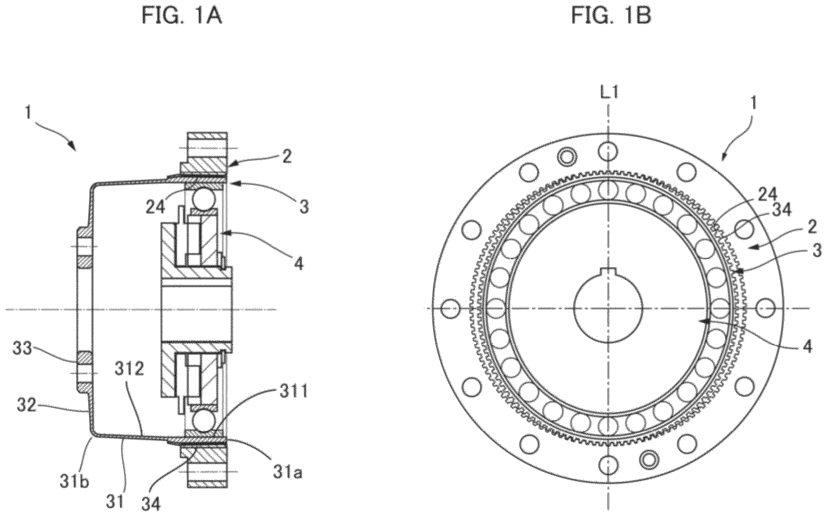

FIG. 1A is a longitudinal cross-sectional view of a cup-type strain wave gearing incorporating a cup-shaped flexible externally toothed gear molded using a mold to which the present invention is applied, and FIG. 1B is a front view of the same. A cup-type strain wave gearing 1 has an annular rigid internally toothed gear 2, a flexible externally toothed gear 3 disposed coaxially inside the internally toothed gear 2, and an ellipsoidally contoured wave generator 4 fitted inside the externally toothed gear 3. The rigid internally toothed gear 2 and the flexible externally toothed gear 3 are spur gears of the same module (m). The difference in the number of teeth between the two gears is 2n (n is a positive integer), with the rigid internally toothed gear 2 having more teeth. The flexible externally toothed gear 3 are caused to flex into an ellipsoidal shape by the ellipsoidally contoured wave generator 4, and the external teeth 34 mesh with internal teeth 24 of the rigid internally toothed gear 2 at both end portions of the ellipsoidal shape in the direction of a major axis L1. When the wave generator 4 is caused to rotate, the two meshing positions between the two gears 2, 3 move in the circumferential direction, and relative rotation corresponding to the difference in the number of teeth between the two gears is generated between the two gears 2, 3.

The cup-shaped flexible externally toothed gear 3 has a cylindrical part 31 capable of flexing in the radial direction, a diaphragm 32 that is continuous with a rear end 31b, which is one end of the cylindrical part 31, and that extends radially inward, a rigid annular boss 33 that is continuous with an inner peripheral edge of the diaphragm 32, and external teeth 34 formed on an outer peripheral surface portion at the side of an open end 31a, which is the other end (front end) of the cylindrical part 31. An inner diameter of a circular inner peripheral surface portion 311 of the portion of the cylindrical part 31 where the external teeth 34 are formed is the same in the axial direction, and an inner diameter of a circular inner peripheral surface portion 312 extending from the circular inner peripheral surface portion 311 to the diaphragm 32 gradually decreases toward the diaphragm 32. The cylindrical part 31 is caused to flex into an ellipsoidal shape by the ellipsoidally contoured wave generator 4 fitted into the circular inner peripheral surface portion 311 from the side of the open end 31a. The flexible externally toothed gear 3 is a molded product molded using a mold. For example, the flexible externally toothed gear 3 is a product that is injection-molded using a thermoplastic resin. The rigid internally toothed gear 2 can also be a molded product.

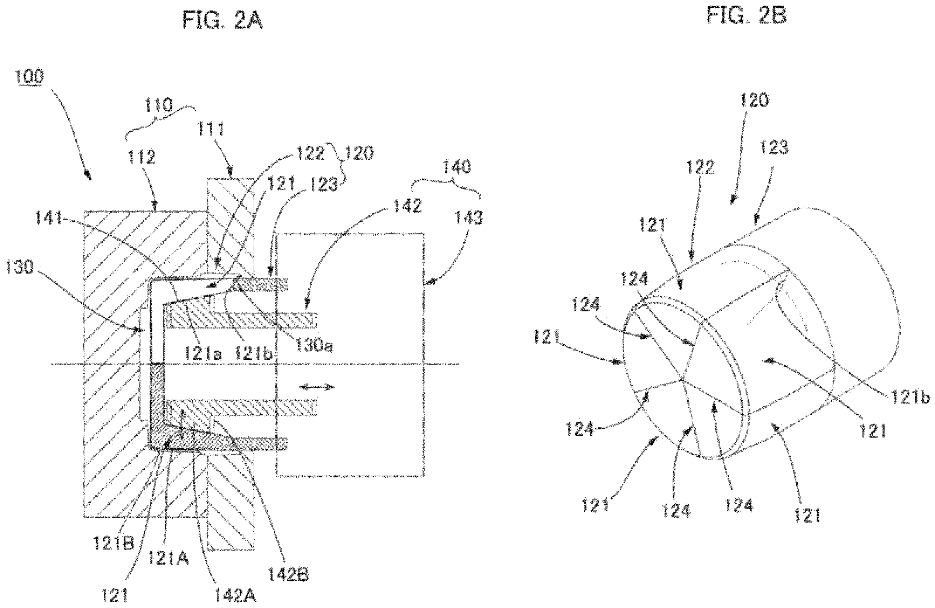

FIG. 2A is an explanatory drawing of a mold used to mold the flexible externally toothed gear 3, and FIG. 2B is a perspective view of a center die of the mold. A mold 100 has an outer die 110 that defines the outer shape of the flexible externally toothed gear 3, and a center die 120 that defines the inner shape of the flexible externally toothed gear 3. The outer die 110 of the present example has a pair of opening/closing dies 111, 112 that can open and close in the axial direction. In a clamped state in which the opening/closing dies 111, 112 have been closed and the center die 120 has been inserted from the side of open ends thereof, a cavity 130 for molding the flexible externally toothed gear is formed between the opening/closing dies and the center die.

On one opening/closing die 111 of the outer die 110 is formed a shaping inner peripheral surface that defines the outer shape of the cylindrical part 31 at the side where the external teeth 34 are formed. On the other opening/closing die 112 are formed a shaping inner peripheral surface portion that defines the outer shape of the cylindrical part 31 at the diaphragm side, and a shaping inner end surface that defines an outer surface shape continuous with the outer peripheral surface of the cylindrical part 31 in the diaphragm 32 and an outer surface shape of the boss 33.

The center die 120 is inserted in the axial direction into the outer die 110 from the side of the open end thereof, and the center die 120 defines the inner peripheral shape of the flexible externally toothed gear 3. The center die 120 has a shaping outer peripheral surface that defines the circular inner peripheral surface portion 311 of the cylindrical part 31 of the flexible externally toothed gear 3 and the tapered circular inner peripheral surface portion 312 of the cylindrical part continuous with the portion 311, and a shaping outer end surface that defines an inner surface shape continuous with the inner peripheral surface of the cylindrical part 31 in the diaphragm 32 and an inner surface shape of the boss 33.

The center die 120 has a cup-shaped die divided part 122, which has a plurality of divided dies 121 that are equally divided in the circumferential direction and that have fan-shaped cross sections, defining the inner peripheral surface shape of the flexible externally toothed gear 3, and a cylindrical die support part 123 that supports the die divided part 122. In addition, the center die 120 is provided with a divided die movement mechanism 140 that retracts each of the divided dies 121 of the die divided part 122 from a molding position 121A (the position shown by the solid lines in FIG. 2A) to a retracted position 121B (the position shown by the imaginary lines in FIG. 2A) that is slightly retracted inward in the radial direction from the molding position 121A.

As previously described, the flexible externally toothed gear 3 to be molded meshes with the rigid internally toothed gear 2, which is one of the constituent components of the strain wave gearing, at a plurality of positions equiangularly spaced in the circumferential direction. In the present example, as previously described, the gears mesh at two positions 180 degrees apart in the circumferential direction. The die divided part 122 has a collet structure, and a plurality of divided dies 121 are formed by a plurality of division lines 124 extending in the axial direction and formed at equiangularly spaced positions along the circumferential direction. In the present example, the die divided part 122 is constituted of five divided dies 121 that are equally divided in the circumferential direction. The locations of the die divisions in the center die 120 could possibly result in error during molding. If molding portions corresponding to the divided positions of the divided dies 121 in the flexible externally toothed gear 3 are simultaneously located at two meshing positions of the molded flexible externally toothed gear 3, there is a risk of problems such as poor meshing occurring due to molding error. In order to minimize the effects of molding error, the number of divisions of the divided dies is set so that the molding portions corresponding to the division positions of the divided dies 121 do not simultaneously match the meshing positions at multiple points.

In the present invention, the number of divisions is set as follows. If m and n are positive integers, where m is the number of meshing positions of the flexible externally toothed gear 3, and n is the number of divisions of the divided dies, then m and n are set to be relatively prime (the greatest common divisor of both numbers is set to 1). For example, as shown in FIG. 1A and 1B, when there are two meshing positions, the number of divisions (the number of divided dies 121) is set to 3, 5, 7, 9... When there are three meshing positions of the two gears due to a three-lobe shaped wave generator, the number of divisions is set to 2, 4, 5, 7, 8...

Next, a taper mechanism is employed for the divided die movement mechanism 140 of the present example. On the inner peripheral surface of each divided die 121 of the die divided part 122 is formed a tapered inner peripheral surface 121a of which an inside diameter gradually decreases from a rear end supported by the die support part 123 toward a tip end side in the axial direction. The divided die movement mechanism 140 includes a core 142 having a tapered outer peripheral surface 141 complementary to the tapered inner peripheral surfaces 121a of the divided dies 121, and a core-driving part 143 that moves the core 142 to an advanced position 142A (position indicated by solids line in FIG. 2A) where the core 142 is axially pressed into the inside of the die divided part 122, and to a retreated position 142B (position indicated by imaginary lines in FIG. 2A) where the core is retreated from the advanced position 142A.

The core 142 is positioned at the advanced position 142A where the core is pushed along the axial direction into the inside of the die divided part 122 of the center die 120. In this state, the tapered outer peripheral surface 141 of the core 142 is pressed against the tapered inner peripheral surfaces 121a of the divided dies 121, and the divided dies 121 are pushed out to the radially outward molding position 121A starting from the rear end parts attached to the die support part 123. When the core 142 retreats from the advanced position 142A to the retreated position 142B along the axial direction, the divided dies 121 return to the retracted position 121B retreated slightly radially inwardly.

When the flexible externally toothed gear 3 of the strain wave gearing 1 is molded using the mold 100 thus configured, and the center die 120 is pulled out from the outer die 110 of the mold 100 in the clamped state after molding, the core 142 is returned from the advanced position 142A to the retreated position 142B, and each of the divided dies 121 of the die divided part 122 of the center die 120 is retracted to the retracted position 121B retreated slightly radially inwardly from the molding position 121A. After each of the divided dies 121 has been retracted to the retracted position 121B, the mold-opening operation of the mold 100 is performed. As a result, even if the center die 120 does not have a draft angle, the operation of pulling out the center die 120 from the outer die 110 side can be performed smoothly without applying excessive pulling force. This makes it possible to avoid adverse effects such as a shortened die life of the mold 100.

When the divided dies 121 of the die divided part 122 are spread outward in the radial direction by the core 142, minute gaps are formed between the divided dies 121. By using a material that is resistant to high temperatures and has low elasticity as the molding material, it is possible to prevent the molding material from entering the minute gaps between the divided dies to a degree that does not impair practical application.

To reliably prevent the molding material from entering the minute gaps formed between the divided dies 121, for example, the die divided part 122 is covered with a very thin cup-shaped outer cylinder, and an outer surface of this outer cylinder defines the inner peripheral surface shape of the flexible externally toothed gear 3. In this case, during molding, the outer cylinder is slightly expanded and deformed by the divided dies 121. During die removal, the inner divided die 121 returns to the retracted position 121B, and the outer cylinder returns to a neutral state of being more contracted than during molding due to the elastic restoring force thereof. Various other methods can be adopted as a mechanism for preventing the molding material from entering the minute gaps between the divided dies 121.

Furthermore, in the center die 120 of the mold 100 described above, the die divided part 122 constituted of the plurality of divided dies 121 should be slightly expandable or contractable as a whole. As the movement mechanism for the divided dies 121, a mechanism other than the divided die movement mechanism 140 described above may be used as a matter of course.

### (Position of divided ends of divided dies)

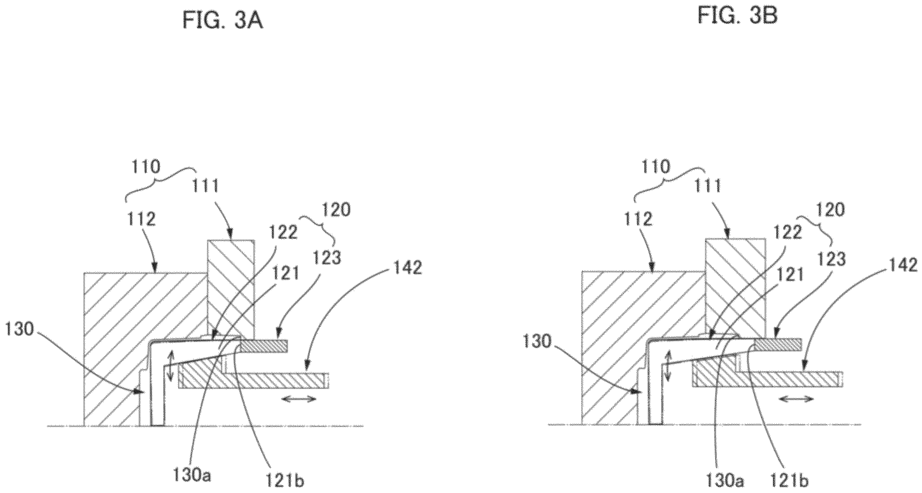

In the center die 120 described above, the divided ends 121b of the divided dies 121 of the die divided part 122 are positioned axially inward of an open end position 130a of the flexible externally toothed gear in the cavity 130 for molding the flexible externally toothed gear. This position is not provided by way of limitation on the positions of the divided ends 121b of the divided dies 121. For example, as shown in FIG. 3A, the divided ends 121b may coincide with an open end position 131a of the flexible externally toothed gear in the axial direction. In addition, as shown in FIG. 3B, the divided ends 121b may be positioned axially outward of the open end position 131a.

### (Other example of flexible externally toothed gear to be molded)

The above example is a case in which the flexible externally toothed gear 3 to be molded is cup-shaped. The present invention can be used to mold a top-hat-shaped flexible externally toothed gear of a top-hat-shaped strain wave gearing. The mold of the present invention can also be used to mold a cylindrical flexible externally toothed gear used in a flat strain wave gearing in which one flexible externally toothed gear meshes with two rigid internally toothed gears.

## Claims

1. A mold used to mold a flexible externally toothed gear, which is one of constituent components of a strain wave gearing and which has a cylindrical part capable of flexing in a radial direction, the mold **characterized by** comprising:
an outer die that defines an outer peripheral surface shape of the cylindrical part, and
a center die that defines an inner peripheral surface shape of the cylindrical part, wherein
the center die has:
a die divided part that is divided in a circumferential direction to have a plurality of divided dies and defines the inner peripheral surface shape of the cylindrical part, and
a divided die movement mechanism that causes each of the divided dies of the die divided part to retract from a molding position to a retracted position radially inward of the molding position.

2. The mold for the flexible externally toothed gear of claim 1, wherein
the flexible externally toothed gear to be molded meshes with a rigid internally toothed gear, which is one of the constituent components of the strain wave gearing, at a plurality of positions equiangularly spaced in the circumferential direction;
the die divided part is constituted of the plurality of the divided dies divided by a plurality of division lines extending in an axial direction and formed at positions equiangularly spaced along the circumferential direction; and
where m and n are positive integers, and where m is the number of meshing positions of the flexible externally toothed gear, and n is the number of divisions of the divided dies,
when m is an even number, n is an odd number relatively prime to m, and
when m is an odd number n is an even number relatively prime to m.

3. The mold for the flexible externally toothed gear of claim 2, wherein
the divided die movement mechanism comprises a taper mechanism, and wherein
the taper mechanism, which is at an advanced position advanced along the axial direction, forms a state in which the divided dies are positioned at the molding position on the radially outer side, and,
the tapered mechanism, which is at a retreated position retreated along the axial direction, forms a state in which the divided dies are retracted to the retracted position on the radially inner side.

4. The mold for the flexible externally toothed gear of claim 2, wherein
the flexible externally toothed gear to be molded is
a cup-shaped flexible externally toothed gear having a diaphragm extending inward in the radial direction from one end of the cylindrical part and external teeth formed at an outer peripheral surface portion at the side of the other end of the cylindrical part, or
a top-hat-shaped flexible externally toothed gear having a diaphragm extending outward in the radial direction from one end of the cylindrical part and external teeth formed at an outer peripheral surface portion at the side of the other open end of the cylindrical part, and wherein
the outer die has a pair of opening/closing dies that can be opened and closed in the axial direction.

5. A method for molding a flexible externally toothed gear in which the flexible externally toothed gear for a strain wave gearing is molded using the mold according to any one of claims 1 to 4,
the molding method **characterized by** comprising the steps of
retracting each of the divided dies of the die divided part of the center die from the molding position to the retracted position during mold-opening in which the center die is pulled out of the outer die in the mold in a clamped state after molding,
and
starting a mold-opening operation for the mold after each of the divided dies has been retracted to the retracted position.

## Amended claims

### Amended claims under Art. 19.1 PCT

1. A mold used to mold a flexible externally toothed gear, which is one of constituent components of a strain wave gearing and which has a cylindrical part capable of flexing in a radial direction, the mold **characterized by** comprising:
an outer die that defines an outer peripheral surface shape of the cylindrical part, and
a center die that defines an inner peripheral surface shape of the cylindrical part, wherein
the center die has
a die divided part that is divided in a circumferential direction to have a plurality of divided dies and defines the inner peripheral surface shape of the cylindrical part, and
a divided die movement mechanism that causes each of the divided dies of the die divided part to retract from a molding position to a retracted position radially inward of the molding position, and wherein
the flexible externally toothed gear to be molded meshes with a rigid internally toothed gear, which is one of the constituent components of the strain wave gearing, at a plurality of positions equiangularly spaced in the circumferential direction;
the die divided part is constituted of the plurality of the divided dies divided by a plurality of division lines extending in an axial direction and formed at positions equiangularly spaced along the circumferential direction; and
where m and n are positive integers, and where m is the number of meshing positions of the flexible externally toothed gear, and n is the number of divisions of the divided dies,
when m is an even number, n is an odd number relatively prime to m, and
when m is an odd number n is an even number relatively prime to m.

2. The mold for the flexible externally toothed gear of claim 2, wherein
the divided die movement mechanism comprises a taper mechanism, and wherein
the taper mechanism, which is at an advanced position advanced along the axial direction, forms a state in which the divided dies are positioned at the molding position on the radially outer side, and,
the tapered mechanism, which is at a retreated position retreated along the axial direction, forms a state in which the divided dies are retracted to the retracted position on the radially inner side.

3. The mold for the flexible externally toothed gear of claim 2, wherein
the flexible externally toothed gear to be molded is
a cup-shaped flexible externally toothed gear having a diaphragm extending inward in the radial direction from one end of the cylindrical part and external teeth formed at an outer peripheral surface portion at the side of the other end of the cylindrical part, or
a top-hat-shaped flexible externally toothed gear having a diaphragm extending outward in the radial direction from one end of the cylindrical part and external teeth formed at an outer peripheral surface portion at the side of the other open end of the cylindrical part, and wherein
the outer die has a pair of opening/closing dies that can be opened and closed in the axial direction.

4. A method for molding a flexible externally toothed gear in which the flexible externally toothed gear for a strain wave gearing is molded using the mold according to any one of claims 2 to 4,
the molding method **characterized by** comprising the steps of
retracting each of the divided dies of the die divided part of the center die from the molding position to the retracted position during mold-opening in which the center die is pulled out of the outer die in the mold in a clamped state after molding,
and
starting a mold-opening operation for the mold after each of the divided dies has been retracted to the retracted position.
